# EUROPÄISCHE PATENTANMELDUNG

(11) **EP 1 612 096 A2**
(43) Veröffentlichungstag der Anmeldung: **04.01.2006**
(21) Anmeldenummer: 05012603.6
(22) Anmeldetag: 11.06.2005
(51) Int. Cl.: B60N 2/46, B60N 2/48

(54) **Sitzanordnung in einem Fahrzeug und Insassenschutzsystem für ein Fahrzeug**

(30) Priorität: 24.06.2004 DE 102004030462
(71) Anmelder: DaimlerChrysler AG, 70567 Stuttgart (DE)
(72) Erfinder: Warwel, Jürgen, 70195 Stuttgart (DE)

(57) **Zusammenfassung**

Es wird eine Sitzanordnung (1) in einem Fahrzeug, mit einem Sitz (7), dem eine zwischen einer hochgeklappten Nichtgebrauchsstellung und einer heruntergeklappten Gebrauchsstellung schwenkbare Armlehne (21) zugeordnet ist, vorgeschlagen.

Die Sitzanordnung (1) zeichnet sich durch eine Einrichtung zur Verlagerung der in Nichtgebrauchsstellung angeordneten Armlehne (21) -in Fahrzeuglängsrichtung gesehen- nach vorne und gegebenenfalls -in Fahrzeughochrichtung gesehen- nach oben in eine den Thorax- und Beckenbereich des Sitzbenutzers (13) zumindest teilweise überdeckende Seitenabstützposition aus.

## Beschreibung

Die Erfindung betrifft eine Sitzanordnung in einem Fahrzeug, umfassend eine zwischen einer hochgeklappten Nichtgebrauchsstellung und einer heruntergeklappten Gebrauchsstellung schwenkbare Armlehne, gemäß Oberbegriff des Anspruchs 1, eine Sitzanordnung in einem Fahrzeug, gemäß Oberbegriff des Anspruchs 2, sowie ein Insassenschutzsystem gemäß Anspruch 13.

Aus der DE-OS 22 53 265 geht eine Sitzanordnung für den Fondbereich eines Kraftfahrzeugs hervor, die drei nebeneinander angeordnete Sitze umfasst. Der mittlere Sitz ist mit einer Kopfstütze versehen, die aus einer Kopfrückhaltestellung heraus in Richtung auf ein Sitzteil des mittleren Sitzes in eine in Insassenschulterhöhe liegende Stellung zur seitlichen Abstützung und Rückhaltung der auf den benachbarten Fahrzeugsitzen befindlichen Fahrzeuginsassen verstellbar ist. Der mittlere Sitz ist ferner mit einer in einer Rückenlehne versenkt anordenbaren Armlehne versehen, die bei Nichtbenutzung des Sitzes in eine Gebrauchsstellung heraus- beziehungsweise herunterklappbar ist, in der sie im Falle eines Seiten- oder Schrägaufpralls des Kraftfahrzeugs der seitlichen Abstützung und Rückhaltung der Beckenregion von auf benachbarten Sitzen befindlichen Fahrzeuginsassen dient. Die Armlehne und die Kopfstütze sind mittels einer Verbindungsstange zwangsgekoppelt, so dass beim Herunterklappen der Armlehne gleichzeitig auch die Kopfstütze in ihre seitliche Abstütz- und Rückhalteposition verlagert wird. Die bekannte Sitzanordnung weist den Nachteil auf, dass die Erhöhung der Sicherheit der Fahrzeuginsassen bei einem Seiten- oder Schrägaufprall nur dann gewährleistet werden kann, wenn die Fahrzeuginsassen zuvor die Armlehne und die Kopfstütze manuell in ihre seitliche Abstütz- und Rückhalteposition verlagert haben. Bei hochgeklappter, in Nichtgebrauchsposition angeordneter Armlehne und auf Grund der Zwangskopplung ebenfalls in Kopfrückhaltestellung angeordneter Kopfstütze sind diese hinsichtlich der seitlichen Abstützung von auf benachbarten Sitzen angeordneten Fahrzeuginsassen wirkungslos. Da die Armlehne beim Verschwenken aus ihrer in der Rückenlehne des mittleren Sitzes versenkt angeordneten Nichtgebrauchstellung in ihre heruntergeklappte Gebrauchsstellung in einem großen Winkelbereich verschwenkt wird, der größer 90° ist, ist ein automatisiertes Herunterklappen der Armlehne mit hoher Geschwindigkeit praktisch nicht realisierbar, da die Verletzungsgefahr für die auf den benachbarten Sitzen angeordneten Fahrzeuginsassen zu groß wäre. Damit eignet sich dieses System nicht zur Verwendung im Zusammenhang mit einem auch als Pre-Safe-Insassenschutzsystem bezeichneten Insassenschutzsystem, bei dem mittels mindestens eines Sensors ein bevorstehender Aufprall auf das Fahrzeug ermittelt beziehungsweise vorherbestimmt wird und im oder am Fahrzeug vorgesehene Sicherheitselemente in Alarmzustand versetzt beziehungsweise in Schutzposition bewegt werden.

Es ist Aufgabe der Erfindung, eine Sitzanordnung der eingangs genannten Art zu schaffen, bei der bei einem Seiten- oder Schrägaufprall eine seitliche Abstützung der Fahrzeuginsassen gewährleistet werden kann und die im Zusammenhang mit einem Insassenschutzsystem, insbesondere Pre-Safe-Insassenschutzsystem, funktionssicher einsetzbar ist.

Zur Lösung der Aufgabe wird eine Sitzanordnung mit den Merkmalen des Anspruchs 1 vorgeschlagen. Diese zeichnet sich durch Mittel zur Verlagerung der in Nichtgebrauchsstellung angeordneten, also hochgeklappten Armlehne -in Fahrzeuglängsrichtung gesehen- nach vorne und gegebenenfalls -in Fahrzeughochrichtung gesehen- nach oben in eine den Thorax- und Beckenbereich des Sitzbenutzers zumindest teilweise überdeckende Seitenabstützposition aus. Der Verstellweg der Armlehne in die Seitenabstützposition ist relativ klein, so dass eine Verlagerung mit hoher Geschwindigkeit erfolgen kann, ohne dass dabei eine Verletzungsgefahr für die in unmittelbarer Nähe auf benachbarten Sitzen angeordneten Fahrzeuginsassen besteht. Die in hochgeklappter Stellung angeordnete Armlehne wird also -anders als bei der bekannten Sitzanordnung- zur seitlichen Abstützung der auf benachbarten Sitzen befindlichen Fahrzeuginsassen nicht heruntergeklappt.

Die erfindungsgemäße Einrichtung kann Teil eines Pre-Safe-Insassenschutzsystems, wie es eingangs beschrieben ist, sein. Das heißt, die Verlagerung der Armlehne in die Seitenabstützposition, in der ein auf einem versetzt dazu angeordneten Sitz befindlicher Fahrzeuginsasse bei einem Seiten- oder Schrägaufprall auf das Fahrzeug seitlich abgestützt ist, erfolgt automatisiert unmittelbar vor einem möglicherweise bevorstehenden Aufprall oder im Moment des Aufpralls. Die Aktivierung der Einrichtung zur Verstellung der Armlehne in die den Thorax- und Beckenbereich eines auf dem Sitz sitzenden Insassens seitlich überdeckende Seitenabstützposition mittels des Insassenschutzsystems kann also bereits schon dann erfolgen, wenn sensorisch eine konkrete Gefahrensituationen ermittelt beziehungsweise mindestens ein Fahrzeugaggregat oder eine Fahrzeugeinrichtung einen bestimmten Betriebszustand aufweist, zum Beispiel wenn eine Näherungssensorik ein kritisches Hindernis erkennt oder wenn ein Antiblockier-System oder ein Brems-Assistent-System aktiv in einen Bremsvorgang eingreift. Unter einem Brems-Assistent-System wird hierbei ein System verstanden, das bei bestimmten Parametern, zum Beispiel Geschwindigkeit und Kraft der Bremspedalbetätigung, davon ausgeht, dass eine Notbremsung durchgeführt werden soll und das dementsprechend die Bremsanlage zur Erzielung eines minimalen Bremswegs ansteuert. Unter einem kritischen Hindernis wird hierbei ein Hindernis verstanden, das aufgrund der aktuellen Fahrzeuggeschwindigkeit, Fahrzeugrichtung und gegebenenfalls Bremsverzögerung mit einer erhöhten Wahrscheinlichkeit zu einer Kollision mit dem Fahrzeug führen wird.

Zur Lösung der Aufgabe wird auch eine Sitzanordnung mit den Merkmalen des Anspruchs 2 vorgeschlagen, die sich durch Mittel zum Anheben der in Gebrauchsstellung angeordneten Armlehne im Bereich ihres schwenklagernahen Endes in eine den seitlichen Überdeckungsbereich zwischen Armlehne und Thorax-/Beckenbereich des Sitzbenutzers in Fahrzeughochrichtung vergrößernde Schrägstellung. Der Erfindung liegt die Erkenntnis zu Grunde, dass die in Gebrauchsstellung heruntergeklappte, im Wesentlichen horizontal angeordnete Armlehne im Falle eines Seiten- oder Schrägaufprall aufgrund nur unzureichender seitlicher Überdeckung mit den auf dem Sitz befindlichen Insassen praktisch keine Abstützwirkung für dessen Thorax besitzt und daher verbesserungswürdig ist. Auch bei der Sitzanordnung gemäß Anspruch 2 ist der reale Verstellweg der Armlehne in die Seitenabstützposition relativ klein, so dass die Anhebung des hinteren, lagerseitigen Endes der Armlehne mit hoher Geschwindigkeit erfolgen kann, ohne dass dabei eine Verletzungsgefahr für die Fahrzeuginsassen besteht. Zur Aktivierung der Einrichtung beziehungsweise deren Integration in ein Insassenschutzsystem, wie vorstehend beschrieben, wird auf die vorstehenden Ausführungen verwiesen.

In besonders bevorzugter Ausführungsform der Sitzanordnung ist vorgesehen, dass diese eine Einrichtung mit den funktionalen Eigenschaften der aus den Ansprüche 1 und 2 hervorgehenden Einrichtungen aufweist. Das heißt, die Einrichtung ist sowohl dazu geeignet, die in Nichtgebrauchsstellung angeordnete Armlehne -in Fahrzeuglängsrichtung gesehen- nach vorne und gegebenenfalls -in Fahrzeughochrichtung gesehen- nach oben in eine den Thorax- und Beckenbereich des Sitzbenutzers zumindest teilweise überdeckende Seitenabstützposition zu verlagern, als auch die in Gebrauchsstellung angeordnete Armlehne im Bereich ihres schwenklagernahen Endes in eine den seitlichen Überdeckungsbereich zwischen Armlehne und Thorax-/Beckenbereich des Sitzbenutzers in Fahrzeughochrichtung vergrößernde Schrägstellung anzuheben. Eine besonders vorteilhafte konstruktive Ausgestaltung zur Realisierung dieser Funktionen wird nachfolgend anhand der Zeichnungen näher beschrieben.

Im Zusammenhang mit der hier vorliegenden Erfindung wird unter dem Begriff "Armlehne" sowohl eine Seitenarmlehne für einen Einzelsitz, die sich gegebenenfalls im Freiraum zwischen zwei nebeneinander angeordneten Sitzen befindet, als auch eine Mittelarmlehne für eine im Fondbereich des Fahrzeugs angeordnete Sitzbank verstanden. Bei einem vorteilhaften Ausführungsbeispiel der Sitzanordnung ist vorgesehen, dass die Armlehne in Nichtgebrauchsstellung in einer in einem Rückenteil vorgesehenen Ausnehmung versenkt angeordnet ist. Wichtig ist, dass die Armlehne so dimensioniert ist, dass eine seitliche Abstützung der Fahrzeuginsassen auch bei hohen Querbeschleunigungen gewährleistet werden kann.

Besonders bevorzugt wird ein Ausführungsbeispiel der Sitzanordnung, das sich dadurch auszeichnet, dass die Mittel zur Verlagerung der Armlehne in Seitenabstützposition und zum Anheben derselben an ihrem lagerseitigen Endbereich in Schrägstellung ein Mehrgelenkscharnier umfassen, das an einem Rückenteil eines Fahrzeugsitzes und/oder an der Fahrzeugkarosserie angebracht ist. Unter dem Begriff "Rückenteil" wird nicht nur ein Rückenteil eines vollwertigen Sitzes, sondern auch ein in der Breite reduziertes Rückenteil zwischen zwei vollwertigen Sitzen verstanden, das beispielsweise auch von einer hoch- und herunterklappbaren Mittelarmlehne gebildet sein oder die Mittelarmlehne aufweisen kann. Diese Art der mechanischen Anbindung der Armlehne an die Fahrzeugaufbaustruktur ist kostengünstig herstellbar und weist einen nur geringen Platzbedarf auf.

Bei einem besonders vorteilhaften Ausführungsbeispiel der Sitzanordnung ist vorgesehen, dass die Einrichtung mittels einer Steuereinheit einer Insassenschutzeinrichtung aktivierbar ist und somit im Falle eines Seiten- oder Schrägaufpralls auf das Fahrzeug zur seitlichen Abstützung und Rückhaltung der benachbart zum Sitz angeordneten Fahrzeuginsassen dient. Die Einrichtung kann gegebenenfalls zusätzlich auch manuell aktivierbar sein, damit sich die Fahrzeuginsassen auch zum Ausruhen oder Schlafen seitlich an die in Schrägstellung beziehungsweise Seitenabstützposition verlagerte Armlehne anlehnen können.

Weitere vorteilhafte Ausführungsbeispiele der Sitzanordnung erbeben sich aus Kombinationen der in den Unteransprüchen genannten Merkmale.

Die Erfindung wird im Folgenden anhand der Zeichnungen näher erläutert. Es zeigen:
- Fig. 1: einen Ausschnitt eines ersten Ausführungsbeispiels der erfindungsgemäßen Sitzanordnung mit einer in Nichtgebrauchsstellung hochgeklappten Armlehne in Seitenansicht,
- Fig. 2: einen Ausschnitt eines zweiten Ausführungsbeispiels der Sitzanordnung mit einer in Gebrauchsstellung heruntergeklappten Armlehne in Seitenansicht,
- Fig. 3 und 4: jeweils einen Ausschnitt eines dritten Ausführungsbeispiels der Sitzanordnung mit einer Einrichtung zur seitlichen Insassenabstützung bei Seiten- oder Schrägaufprall in verschiedenen Funktionsstellungen und
- Fig. 5: in perspektivischer Darstellung ein in den Figuren 3 und 4 in Seitenansicht dargestelltes Mehrgelenkscharnier zur Lagerung einer Armlehne.

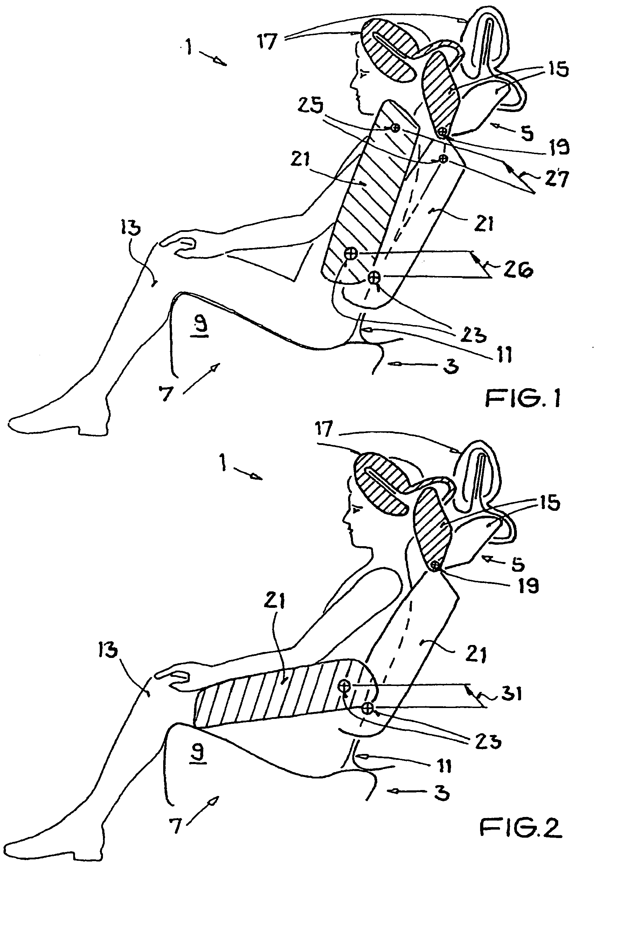

Figur 1 zeigt in schematischer Darstellung einen Teil eines Ausführungsbeispiels einer Sitzanordnung 1 für ein Kraftfahrzeug. Die Sitzanordnung 1 umfasst eine mehrteilig ausgeführte Sitzbank 3 mit einem ersten, mittleren Sitz 5 und benachbart hierzu angeordnete, äußere Sitze 7. Die Sitze 5 und 7, die als voneinander beabstandete, vollwertige Einzelsitze ausgebildet sein können, umfassen jeweils ein Sitzteil 9 sowie ein Rückenteil 11. In der Darstellung gemäß Figur 1 ist lediglich das Sitzteil 9 und das Rückenteil 11 eines äußeren Sitzes 7 erkennbar, auf dem ein Fahrzeuginsasse 13 Platz genommen hat. Die äußeren Sitze 7 sind vorzugsweise identisch ausgebildet und weisen vorzugsweise jeweils eine am oberen Rand des Rückenteils 11 angebrachte, in Figur 1 nicht erkennbare Kopfstütze auf.

Das Rückenteil 11 des mittleren Sitzes 5 ist mehrteilig ausgebildet und weist übereinander angeordnete Rückteilsegmente auf, von denen in Figur 1 lediglich das obere Rückteilsegment 15 dargestellt ist. Es ist ersichtlich, dass das obere Rückteilsegment 15 eine wesentlich kleinere Höhe und somit einen deutlich kleineren Gesamtanteil am Rückenteil 11 als das sich bis an das Sitzteil 9 erstreckende untere Rückteilsegment aufweist. Entsprechend klein ist sein.

Am oberen Rückteilsegment 15 ist eine Kopfstütze 17 angeordnet. Die Kopfstütze 17 kann in bekannter Weise am oberen Rückteilsegment 15 schwenkbar gelagert sein. Alternativ ist es möglich, dass die Kopfstütze 17 fest am oberen Rückteilsegment 15 befestigt ist.

Das obere Rückteilsegment 15 ist um eine quer zur Fahrzeuglängsrichtung, als senkrecht zur Bildebene der Figur 1 verlaufende Querachse 19 schwenkbar gelagert, derart, dass es relativ gegenüber dem unteren Rückteilsegment bewegbar ist. Dabei kann das obere Rückteilsegment 15 unmittelbar am unteren Rückteilsegment oder alternativ an einem Karosserieteil oder dergleichen gelagert sein.

In Figur 1 ist das obere Rückteilsegment 15 in einer nach hinten geklappten Normalposition dargestellt, in der sich die Kopfstütze 17 in einer Kopfrückhalteposition befindet. Des Weiteren sind das obere Rückteilsegment 15 und die daran angeordnete Kopfstütze 17 schraffiert in einer Seitenabstützposition dargestellt, welche sie durch ein Verschwenken des Rückteilsegments 15 um die Querachse 19, bei diesem Ausführungsbeispiel um circa 50°, ausgehend von der Normalposition, in Fahrzeuglängsrichtung nach vorne einnehmen. In dieser Seitenabstützposition werden der Kopf und gegebenenfalls der Schulter- und Thoraxbereich des Fahrzeuginsassens, je nach dem, wie groß dieser ist und welche Haltung er im Sitz 7 einnimmt, zumindest teilweise seitlich überdeckt, so dass im Falle eines Seiten- oder Schrägaufpralls des Fahrzeugs eine Seitenabstützung des Fahrzeuginsassens 13 durch Teile des mittleren Sitzes 5 erfolgt, so dass zumindest der Grad seiner Verletzungen reduzierbar ist.

Die Sitzanordnung 1 umfasst weiterhin eine Armlehne 21, die um eine parallel zur Querachse 19 verlaufende Achse 23 zwischen einer hochgeklappten Nichtgebrauchsstellung und einer heruntergeklappten Gebrauchsstellung schwenkbar gelagert ist. Die Armlehne 21 ist in der in Figur 1 dargestellten, hochgeklappten Nichtgebrauchsstellung in einer im Rückenteil 11 des mittleren Sitzes 5 vorgesehenen Vertiefung versenkt angeordnet. In Figur 1 ist an der Armlehne 21 ein von deren Schwenkachse 23 entfernter Referenzpunkt mit dem Bezugszeichen 25 versehen, anhand dessen nachfolgend eine Verlagerungsbewegung der Armlehne 21 in eine Seitenabstützposition verdeutlicht wird.

Ferner sind in Figur 1 nicht dargestellte Mittel vorgesehen, die zur Verlagerung der in Nichtgebrauchsstellung angeordneten Armlehne 21 -in Fahrzeuglängsrichtung gesehennach vorne und -in Fahrzeughochrichtung gesehen- nach oben in eine den Thorax- und Beckenbereich des auf dem äußeren Sitz 7 befindlichen Fahrzeuginsassens 13 zumindest teilweise überdeckende Seitenabstützposition, in welcher die Armlehne 21 in Figur 1 schraffiert dargestellt ist. In der Seitenabstützposition befindet sich die Armlehne 21 in etwa in fluchtender Anordnung zum dahinter angeordneten Fahrzeuginsassen 13, um diesen im Falle eines Seiten- oder Schrägaufpralls seitlich abzustützen und zurückzuhalten, und zwar in dessen Thorax- und Beckenbereich, wodurch die Verletzungsgefahr beziehungsweise der Grad der Verletzungen reduziert ist. Die translatorische Verlagerungsbewegung der Armlehne 21 ist mit Pfeilen 25 und 27 angedeutet. Der Translationsbewegung der Armlehne 21 kann gegebenenfalls auch noch eine kleine Schwenkbewegung um die Achse 23 überlagert werden, um eine optimale seitliche Überdeckung mit dem Fahrzeuginsassen 13 sicherzustellen.

Die Verlagerungsbewegung kann derart erfolgen, dass die Armlehne 21 zunächst nur in Fahrzeuglängsrichtung verlagert wird, bis sie den Rand der Ausnehmung im Rückenteil, in der sie versenkt angeordnet ist, passiert hat, und erst anschließend angehoben wird. Möglich ist auch eine Verlagerung der Armlehne 21 entlang einer entsprechend gekrümmten Bewegungsbahn oder entlang einer geradlinigen, schräg zur Horizontalen in Fahrzeuglängsrichtung ansteigend verlaufenden Bewegungsbahn, wie in Figur 1 mit den Pfeilen 25 und 27 angedeutet.

Die Armlehne 21 und das obere Rückteilsegment 15 können zwangsgekoppelt sein, so dass sie nur gemeinsam verschwenkt werden können. Hierzu kann ein Antrieb ausreichend sein, was den Aufbau der Einrichtung vereinfacht. Selbstverständlich ist es auch möglich, dass die Armlehne 21 und das Rückteilsegment 15 unabhängig voneinander in Seitenabstützposition verstellbar sind.

Der Antrieb zur Verlagerung der hochgeklappten Armlehne 21 aus ihrer Normalposition in Seitenabstützposition kann beispielsweise mindestens Federelement umfassen, das bei in Normalposition angeordneter Armlehne 21 gespannt ist und mit einer Federkraft beaufschlagt. Bei einer Freigabe der Armlehne 21 durch eine Haltevorrichtung wird die Armlehne 21 mit hoher Geschwindigkeit selbsttätig in die schraffiert dargestellte Seitenabstützposition verlagert. Der Antrieb kann alternativ auch von einer Kolben-Zylinder-Einheit, beispielsweise einem Gasdruckdämpfer, oder einem anderen Kraftspeicher gebildet sein. Grundsätzlich ist es auch möglich, einen Motor als Antrieb einzusetzen.

Die Aktivierung der Einrichtung kann manuell oder mit mittels einer nicht dargestellten Steuereinheit einer Insassenschutzeinrichtung erfolgen.

Die erfindungsgemäße Sitzanordnung 1 weist den Vorteil auf, dass nach Aktivierung der Einrichtung, was eine Verlagerung der Armlehne 21 und gegebenenfalls des oberen Rückteilsegments 15 in die Seitenabstützposition bewirkt, der Vorgang reversibel ist, ohne dass hierzu Teile der Einrichtung oder der Sitzanordnung 1 ausgewechselt werden müssen. Das heißt, nach Aktivierung der Einrichtung können die Armlehne 21 und das obere Rückteilsegment 15 ohne weiteres in ihre jeweilige Normalposition zurückverlagert werden, so dass sie zum wiederholten Einsatz zur seitlichen Abstützung der auf den äußeren Sitzen 7 angeordneten Fahrzeuginsassen einsetzbar sind.

Figur 2 zeigt ein zweites Ausführungsbeispiel der Sitzanordnung 1 mit einer weiteren Ausführungsvariante der Einrichtung zur Verlagerung der im Gegensatz zum Ausführungsbeispiel gemäß Figur 1 bereits in heruntergeklappter Gebrauchsstellung angeordneten Armlehne 21 in eine optimalere Seitenabstützposition, in der die seitliche Abstützung der auf den äußeren Sitzen 7 befindlichen Fahrzeuginsassen verbessert ist. Gleiche Teile sind mit gleichen Bezugszeichen versehen, so dass insofern zur Beschreibung der Figur 1 verwiesen wird.

Die Armlehne 21 ist in hochgeklappter Nichtgebrauchsstellung dargestellt. Beim hoch- und herunterklappen der Armlehne 21 bleibt die Lage der Armlehnenschwenkachse 23 unverändert, ist also gegenüber der Fahrzeugaufbaustruktur lagefest angeordnet. Die Einrichtung ist so ausgebildet, dass sie zum Anheben der heruntergeklappten Armlehne 21 im Bereich ihres schwenklagernahen Endes in eine den seitlichen Überdeckungsbereich zwischen Armlehne 21 und Thorax-/Beckenbereich des Fahrzeuginsassens 13 in Fahrzeughochrichtung vergrößernde, in Figur 2 schraffiert dargestellte Schrägstellung verlagerbar ist. Das einseitige "Anheben" der Armlehne 21 erfolgt hier derart, dass deren Schwenkachse sowohl in Fahrzeuglängsrichtung nach vorne als auch in Fahrzeughochrichtung nach oben verlagert wird, wie mit einem Pfeil 31 angedeutet. Dabei wird die Armlehne 21 an ihrem freien Ende abgesenkt.

Wie aus Figur 2 ersichtlich, ist der Wirkungsbereich der heruntergeklappten, schräggestellten Armlehne 21 hinsichtlich der seitlichen Abstützung des Fahrzeuginsassens 13, insbesondere im Bereich von dessen Thorax, deutlich größer als wenn die Armlehne 21 nur heruntergeklappt und nicht gegenüber der Horizontalen schräg gestellt wäre.

Auch bei dem Ausführungsbeispiel gemäß Figur 2 können Armlehne 21 und oberes Rückteilsegment 15 zwangsgekoppelt sein, so dass deren Bewegung in die jeweilige Seitenabstützposition gemeinsam erfolgt.

Den Ausführungsbeispielen gemäß der Figuren 1 und 2 ist gemeinsam, dass eine Seitenabstützung beziehungsweise eine verbesserte Seitenabstützung der auf den Sitzen 7 befindlichen Insassen sowohl bei hoch- als auch bei heruntergeklappter Armlehne 21 realisierbar ist, ohne dabei die Insassen durch die hohen Verlagerungsgeschwindigkeiten zu gefährden.

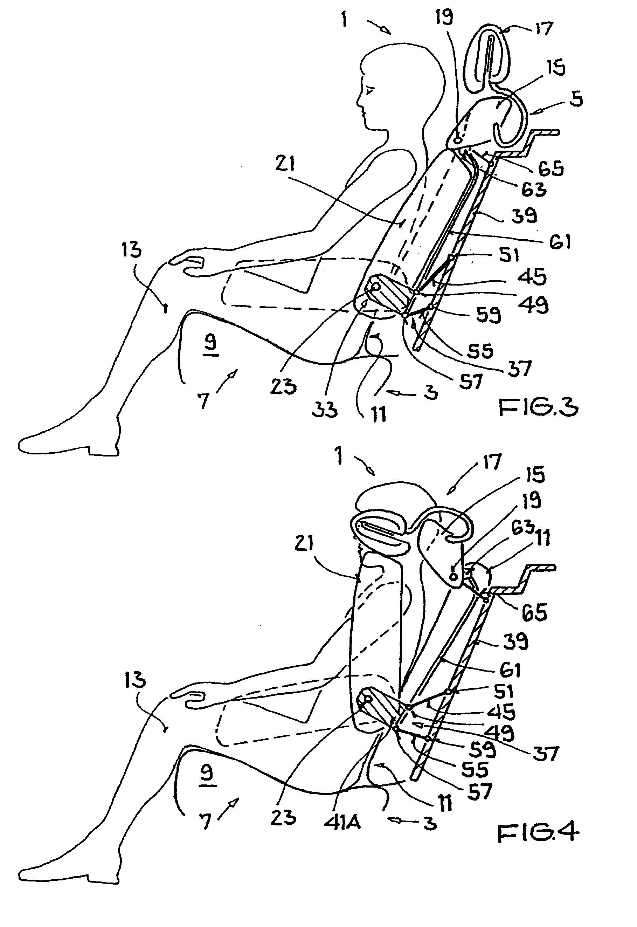

Figuren 3 und 4 zeigen in schematisierter Darstellung ein drittes Ausführungsbeispiel der Sitzanordnung 1 mit einer weiteren Ausführungsvariante der Einrichtung. Teile, die bereits anhand der vorangegangenen Figuren beschrieben wurden, sind mit gleichen Bezugszeichen versehen, so dass insofern auf die Beschreibung zu den Figuren 1 und 2 verwiesen wird.

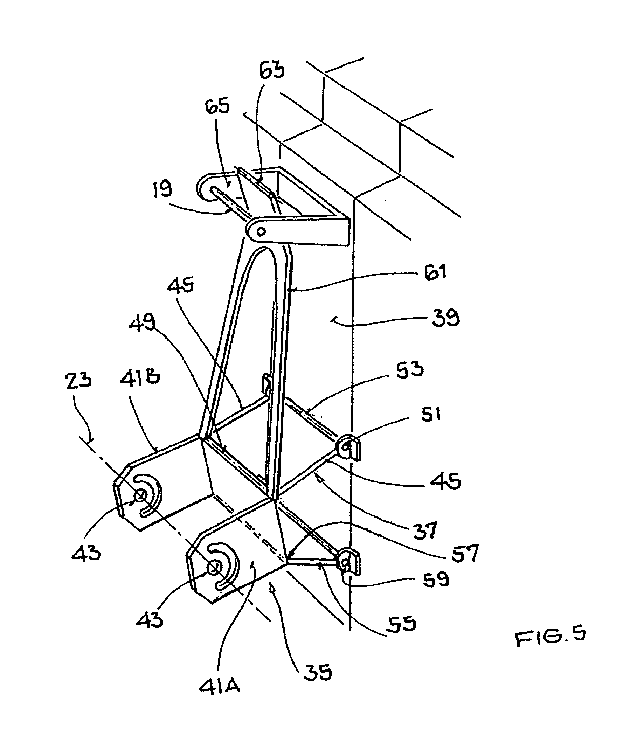

Die Armlehne 21 ist mittels eines Eingelenkscharniers 33 an einem U-förmigen Trägerteil 35 um die Achse 23 schwenkbeweglich gehalten. Das Trägerteil 35 wiederum ist mittels eines Mehrgelenkscharniers 37, welches bei diesem Ausführungsbeispiel von einem Viergelenkscharnier gebildet ist, an einem Karosserieteil 39 angebunden. Wie aus Figur 5 ersichtlich, weist das Trägerteil 35 Seitenwangen 41A und 41B auf, zwischen denen die Armlehne 21 im montierten Zustand (Figuren 3 und 4) angeordnet ist und die jeweils mit einem Scharnierauge 43 versehen sind, in die ein nicht dargestellter Scharnierbolzen eingesteckt wird.

Das Mehrgelenkscharnier 37 ist Teil einer Hebelmechanik, mittels der die Armlehne 21 -wie bei der anhand der Figur 1 beschriebenen Einrichtung- in hochgeklappter Nichtgebrauchsposition -in Fahrzeuglängsrichtung gesehennach vorne und -in Fahrzeughochrichtung gesehen- nach oben in eine den Thorax- und Beckenbereich des Sitzbenutzers zumindest teilweise überdeckende Seitenabstützposition verlagerbar ist und auch -wie bei der anhand der Figur 2 beschriebenen Einrichtung- in heruntergeklappter Gebrauchsstellung im Bereich ihres schwenklagernahen Endes in eine den seitlichen Überdeckungsbereich zwischen Armlehne und Thorax-/Beckenbereich des Sitzbenutzers in Fahrzeughochrichtung vergrößernde Schrägstellung anhebbar ist.

Das Mehrgelenkscharnier 37 umfasst parallel zueinander verlaufende, erste Koppelhebel 45, die an einem Ende im Bereich eines Anbindungspunktes 47 gelenkig, das heißt, um eine Achse 49 schwenkbar mit dem Trägerteil 35 und an ihrem anderem Ende im Bereich eines Anbindungspunktes 51 gelenkig, das heißt, um eine Achse 53 schwenkbar mit dem Karosserieteil 39 gekoppelt sind. Des Weiteren sind parallel zueinander verlaufende, zweite Koppelhebel 55 vorgesehen, die an einem Ende im Bereich eines Anbindungspunktes 57 gelenkig mit dem Trägerteil 35 und an ihrem anderem Ende im Bereich eines Anbindungspunktes 59 gelenkig mit dem Karosserieteil 39 gekoppelt sind. Die jeweils doppelte Koppelhebelausführung gewährleistet eine stabile und spielarme Hebelkonstruktion.

Bei dem Ausführungsbeispiel gemäß der Figuren 3 und 4 sind die Armlehne 21 und das Rückteilsegment 15 bezüglich ihrer Schwenkbewegungen um die Achse 23 beziehungsweise 19 zwangsgekoppelt, was mittels eines Verbindungselements 61, das an einem Ende im Bereich des Anbindungspunktes 47 gelenkig am Trägerteil 35 und an seinem anderen Ende im Bereich eines Anbindungspunktes 63 gelenkig am Rückteilsegment 15 angebracht ist. Das Rückteilsegment 15 selbst ist mittels einer U-förmigen Halterung 65 karosserieseitig lagefest angeordnet.

In Figur 3 ist das Mehrgelenkscharnier 37 in einer Bereitschaftsposition angeordnet, in der sich das Rückteilsegment 15 und die Kopfstütze 17 in Kopfrückhaltestellung befinden und die Armlehne 21 zwischen ihrer hochgeklappten Nichtgebrauchsstellung (durchgezogene Linie) und der heruntergeklappten Gebrauchsstellung (gestrichelte Linie) frei um die Achse 23 schwenkbar ist. Unabhängig davon, in welcher dieser Stellung sich die Armlehne 21 befindet, ist die Einrichtung zur Verlagerung der Armlehne 21 in Seitenabstützposition aktivierbar.

Befindet sich die Armlehne 21 im Moment der Aktivierung, also wenn das Mehrgelenkscharnier 37 entsprechend bewegt wird, in hochgeklappter Nichtgebrauchsstellung, wird diese -anlog wie bei der Einrichtung gemäß Figur 1- nach vorne und oben die den Thorax- und Beckenbereich des Insassens (13) überdeckende Seitenabstützposition bewegt, wie in Figur 4 mit durchgezogener Linie dargestellt. Befindet sich die Armlehne 21 jedoch in heruntergeklappter Gebrauchsstellung, wird diese -analog wie bei der anhand der Figur 2 beschriebenen Einrichtung- in ihrem dem Eingelenkscharnier 33 näherliegenden Endbereich angehoben, wie in Figur 4 mit gestrichelter Linie angedeutet. Bei beiden Varianten wird das Verbindungselement 61 entsprechend angelenkt, damit das Rückteilsegment 15 mit daran vorgesehener Kopfstütze 17 um die Achse 19 in Fahrzeuglängsrichtung nach vorne, ebenfalls in eine Seitenabstützposition verschwenkt wird.

Zusammenfassend bleibt festhalten, dass den anhand der Figuren beschriebenen Ausführungsbeispielen der Sitzanordnung 1 gemeinsam ist, dass die Armlehne 21, unabhängig von ihrer Stellung im Moment der Aktivierung der Einrichtung zur Verlagerung derselben in Seitenabstützposition beziehungsweise hinten hochgestellt, nur kurze Wege verlagert wird, was daher ohne Gefahr von Verletzungen für die in unmittelbarer Nähe befindlichen Insassen mit hoher Geschwindigkeit erfolgen kann. Die erfindungsgemäßen Sitzanordnungen sind daher ohne weiteres im Zusammenhang mit einem oben beschriebenen Insassenschutzsystem einsetzbar. Besonders vorteilhaft ist ferner, dass durch die Aktivierung der Einrichtung, was eine entsprechende Verlagerung der Armlehne 21 in Schutz-/Abstützposition zur Folge hat, keine Teile der Sitzanordnung und beschädigt werden, so dass die Einrichtung beziehungsweise Sitzanordnung ohne weiteres wieder in ihre Bereitschaftsstellung, wie beispielsweise in Figur 3 dargestellt, zurück verlagerbar ist.

## Patentansprüche

1. Sitzanordnung (1) in einem Fahrzeug, mit einem Sitz (7), dem eine zwischen einer hochgeklappten Nichtgebrauchsstellung und einer heruntergeklappten Gebrauchsstellung schwenkbare Armlehne (21) zugeordnet ist,
**gekennzeichnet durch**
eine Einrichtung zur Verlagerung der in Nichtgebrauchsstellung angeordneten Armlehne (21) -in Fahrzeuglängsrichtung gesehen- nach vorne und gegebenenfalls -in Fahrzeughochrichtung gesehen- nach oben in eine den Thorax- und Beckenbereich des Sitzbenutzers (13) zumindest teilweise überdeckende Seitenabstützposition.

2. Sitzanordnung (1) in einem Fahrzeug, mit einem Sitz (7), dem eine zwischen einer hochgeklappten Nichtgebrauchsstellung und einer heruntergeklappten Gebrauchsstellung schwenkbare Armlehne (21) zugeordnet ist, insbesondere nach Anspruch 1,
**gekennzeichnet durch**
eine Einrichtung zum Anheben der in Gebrauchsstellung angeordneten Armlehne (21) im Bereich ihres schwenklagernahen Endes in eine den seitlichen Überdeckungsbereich zwischen Armlehne und Thorax-/Beckenbereich des Sitzbenutzers (13) in Fahrzeughochrichtung vergrößernde Schrägstellung.

3. Sitzanordnung nach Anspruch 1 oder 2,
**dadurch gekennzeichnet,**
**dass** die Armlehne (21) in Nichtgebrauchsstellung in einer in einem Rückenteil (11) vorgesehenen Ausnehmung versenkt angeordnet ist.

4. Sitzanordnung nach einem der Ansprüche 1 bis 3,
**dadurch gekennzeichnet,**
**dass** die Armlehne (21) mittels eines Mehrgelenkscharniers (37), insbesondere Viergelenkscharniers, am Rückenteil (11) und/oder an der Fahrzeugkarosserie angebracht ist.

5. Sitzanordnung nach einem der Ansprüche 1 bis 4,
**dadurch gekennzeichnet,**
**dass** oberhalb der Armlehne (21) eine Kopfstütze (17) angeordnet ist, die vorzugsweise um eine zur Fahrzeuglängsrichtung quer verlaufende Achse (19) in Fahrzeuglängsrichtung nach vorne in eine Seitenabstützposition schwenkbar ist.

6. Sitzanordnung nach einem der vorhergehenden Ansprüche,
**dadurch gekennzeichnet,**
**dass** das Rückenteil (11) mehrteilig ausgebildet ist und übereinander angeordnete Rückteilsegmente aufweist, wobei ein oberes Rückteilsegment (15) um eine zur Fahrzeuglängsrichtung quer verlaufende Achse (19) in Fahrzeuglängsrichtung nach vorne in eine Seitenabstützposition schwenkbar ist.

7. Sitzanordnung nach Anspruch 6,
**dadurch gekennzeichnet,**
**dass** am oberen Rückteilsegment (15) die Kopfstütze (17) angeordnet ist.

8. Sitzanordnung nach einem der vorhergehenden Ansprüche,
**dadurch gekennzeichnet,**
**dass** die Armlehne (21) und die Kopfstütze (17) oder die Armlehne (21) und das obere Rückteilsegment (15) mittels eines Verbindungselement (61) bezüglich ihrer Schwenkbewegungen zwangsgekoppelt sind.

9. Sitzanordnung nach einem der Ansprüche 1 bis 7,
**dadurch gekennzeichnet,**
**dass** die Armlehne (21), die Kopfstütze (17) sowie das obere Rückteilsegment (15) unabhängig voneinander, vorzugsweise manuell, verstellbar ausgebildet sind.

10. Sitzanordnung nach einem der Ansprüche 1 bis 9,
**dadurch gekennzeichnet,**
**dass** die Einrichtung manuell aktivierbar ist.

11. Sitzanordnung nach einem der Ansprüche 1 bis 10,
**dadurch gekennzeichnet,**
**dass** die Einrichtung mittels einer Steuereinheit einer Insassenschutzeinrichtung aktivierbar ist.

12. Sitzanordnung nach einem der Ansprüche 1 bis 11,
**dadurch gekennzeichnet,**
**dass** die Einrichtung ein Teil eines reversiblen Insassenschutzsystem ist.

13. Insassenschutzeinrichtung in einem Fahrzeug,
**gekennzeichnet durch**
eine Sitzanordnung (1) nach einem der Ansprüche 1 bis 12.
